# EUROPEAN PATENT SPECIFICATION

(11) **EP 4 105 751 B1**
(45) Date of publication and mention of the grant of the patent: **09.10.2024**
(21) Application number: 22176123.2
(22) Date of filing: 30.05.2022
(51) Int. Cl.: G05B 23/02, G06N 20/00

(54) **ABNORMALITY DETECTION SYSTEM AND ABNORMALITY DETECTION METHOD**
SYSTEM ZUR DETEKTION VON ANOMALIEN UND VERFAHREN ZUR DETEKTION VON ANOMALIEN
SYSTÈME ET PROCÉDÉ DE DÉTECTION D'ANOMALIES

(30) Priority: 14.06.2021 JP 2021098665
(43) Date of publication of application: 21.12.2022
(73) Proprietor: Hitachi, Ltd., Tokyo 100-8280 (JP)
(72) Inventor: DOHI, Kota, Tokyo, 100-8280 (JP); PUROHIT, Harsh Pramodbhai, Tokyo, 100-8280 (JP); TANABE, Ryo, Tokyo, 100-8280 (JP); YAMAMOTO, Masaaki, Tokyo, 100-8280 (JP); ENDO, Takashi, Tokyo, 100-8280 (JP); KAWAGUCHI, Yohei, Tokyo, 100-8280 (JP)
(74) Representative: MERH-IP Matias Erny Reichl Hoffmann Patentanwälte PartG mbB

(56) References cited:
- EP-A2- 3 379 360
- WO-A1-2020/031570
- CN-A- 112 101 426
- KR-A- 20210 064 619
- US-B2- 7 756 678

## Description

### BACKGROUND OF THE INVENTION

### 1. Field of the Invention

The present invention relates to an abnormality detection system and an abnormality detection method.

### 2. Description of the Related Art

A company suffers from loss when a machine in a factory has an abnormality and is stopped for a long time. Therefore, at the time of cyclic inspection, a skilled person detects an initial abnormality of the machine on the basis of his/her five senses. However, in recent years, since there are not enough skilled persons, mechanization and labor saving are desired. In order to detect an abnormality of a target machine at an early stage, it is necessary to collect and analyze data by attaching various types of sensors to the target machine. However, it is difficult to attach all of the necessary sensors to the target machine due to a physical restriction or a cost of the target machine. Therefore, a technique for estimating, from certain sensor data, other sensor data by using a regression model is proposed (JP-A-2017-207904 (PTL 1)).

In the method described in Patent Literature 1, all variations in the sensor data input in the regression model are described as variations to be estimated. Therefore, in PTL 1, in a case where a variation unrelated to the sensor data to be estimated is added to the input sensor data, the unrelated variation is reflected on a value of the sensor data to be estimated.

US 7 756 678 B2 discloses a method for monitoring an asset system, including: using a plurality of auto-associative neural networks to determine estimates of actual values sensed by at least one sensor in at least one of the plurality of operating regimes; determining a residual between the estimated sensed values and the actual values sensed by the at least one sensor from each of the plurality of auto-associative neural networks; and combining the residuals for performing a fault diagnostic.

EP 3 379 360 A2 discloses an anomaly detection system, including: an arithmetic device that executes processing of learning a predictive model that predicts a behavior of a monitoring target device based on operational data on the device, processing of adjusting an anomaly score such that the anomaly score for operational data under normal operation falls within a predetermined range, the anomaly score being based on a deviation of the operational data acquired from the monitoring target device from a prediction result obtained by the predictive model, processing of detecting an anomaly or a sign of an anomaly based on the adjusted anomaly score.

### SUMMARY OF THE INVENTION

Therefore, an object of the present disclosure is to provide an abnormality detection system and an abnormality detection method capable of performing more stable abnormality detection. The technical improvement is achieved by the solution provided in accordance with the subjectmatter of the independent claims.

An abnormality detection system detects an abnormality of a target machine by a computer according to claim 1. The computer includes a communication unit configured to acquire first data from a first sensor attached to the target machine and second data from a second sensor attached to the target machine, an arithmetic unit, and a memory unit. The arithmetic unit includes an encoding unit trained to generate latent expressions including a predetermined latent expression that estimates the second data on the basis of the first data, a decoding unit trained to restore the first data from the latent expressions, and an abnormality detection unit configured to detect the abnormality of the target machine on the basis of a restoration error between the first data and the first data restored by the decoding unit.

According to the invention, since the second data output from the second sensor is estimated using the predetermined latent expression which is a part of the latent expression, when the first data varies due to factors other than the second sensor, it is possible to describe the variation using another latent expression other than the predetermined latent expression and more robustly estimate the second data than in the related art.

Another aspect of the invention is a method according to claim 7 for detecting an abnormality of a target machine by a computer.

### BRIEF DESCRIPTION OF THE DRAWINGS

FIG. 1 is a block diagram of an abnormality detection system.
FIG. 2 is a hardware configuration diagram of the abnormality detection system.
FIG. 3 is an explanatory diagram when a model is trained.
FIG. 4 is an explanatory diagram illustrating an effect of the present embodiment.
FIG. 5 is a flow chart of a training process.
FIG. 6 is a flow chart of an abnormality detection process (at the time of operation).
FIG. 7 is a block diagram of an abnormality detection system according to a second embodiment.
FIG. 8 is an explanatory diagram of a method for selecting a first sensor.
FIG. 9 is a block diagram of an abnormality detection system according to a modification of the second embodiment.
FIG. 10 is an explanatory diagram of a method for selecting the first sensor.
FIG. 11 is a block diagram of an abnormality detection system according to a third embodiment.
FIG. 12 is an explanatory diagram of a method for detecting an abnormality.
FIG. 13 is a block diagram of an abnormality detection system according to a fourth embodiment.
FIG. 14 is an explanatory diagram of a pre-trained model.
FIG. 15 is a block diagram of an abnormality detection system according to a fifth embodiment.
FIG. 16 is an explanatory diagram of a data expansion unit.
FIG. 17 is a block diagram of an abnormality detection system according to a sixth embodiment.
FIG. 18 is a hardware configuration diagram of the abnormality detection system.
FIG. 19 is an explanatory diagram of a method for setting a hyper parameter in a loss calculation unit.
FIG. 20 is an explanatory diagram illustrating a relation between an abnormality degree and a probability distribution function.
FIG. 21 is a flow chart of a training process.
FIG. 22 is a flow chart of an abnormality detection process.

### DESCRIPTION OF THE PREFERRED EMBODIMENTS

Hereinafter, an embodiment of the invention will be described with reference to the drawings. In this disclosure, a state of a machine to be subjected to abnormality detection (target machine) is determined by a minimum number of sensors. A target machine 2 includes various industrial machines such as a press machine, an injection molding machine, a heating furnace, an NC machine tool, a 3D printer, an electric discharge machine, a welding device, a machining center, a polishing device, an industrial sewing machine, and an industrial robot. The target machine 2 is not limited to the industrial machines, and may also include, for example, electric machines such as an air conditioner, a freezer, and a blower.

One target machine 2 may be configured with a plurality of machines such as a fan, a pump, a slider, a valve, and a motor. For example, physical quantities such as temperature, pressure, speed, voltage, current, load weight, load torque, vibration, and operation sound are measured by sensors. An abnormality detection system 1 determines a state and presence/absence of an abnormality of the target machine 2 on the basis of data output by the sensors.

The abnormality detection system 1 according to this disclosure estimates, on the basis of first data D0 output from a first sensor 11, second data D1 output from a second sensor 12, which is different from the first sensor 11.

The first sensor 11 is attached to the target machine 2 whose abnormality is to be detected, and outputs the first data D0 at the time of training a machine learning model and at the time of operating a machine learning model. The second sensor 12 may be used only at the time of training the machine learning model to output the second data D1, and may be used also at the time of operating the machine learning model to output the second data D1.

In one embodiment, when the sensors attachable to the target machine 2 are limited, a first sensor 11 capable of estimating all sensors required for monitoring the state of the target machine 2 is selected. The first sensor 11 may be one or more. In the following description, a case where one first sensor 11 is used will be mainly described.

The abnormality detection system 1 according to the embodiment described above estimates the second data D1 output from the second sensor 12, which is necessary for monitoring the state of the target machine 2 but is not installed in the target machine 2, on the basis of the first data D0 output from the first sensor 11. The abnormality detection system 1 monitors the state of the target machine 2, detects an abnormality, and identifies a cause of the abnormality on the basis of the first data D0 and the estimated second data D1. The second sensor 12 whose output is estimated with the first data D0 measured by the first sensor 11 may be one or more.

According to this disclosure, since the machine learning model capable of estimating the second data D1 of the second sensor 12 which is not installed from the first data D0 of the first sensor 11 which is installed is generated at the time of training, it is possible to monitor the state and detect the abnormality even when the target machine 2 cannot have a plurality of sensors installed in at the time of operation.

In another embodiment of this disclosure, when physical quantities in accordance with the state of the target machine 2 are measured by the sensors, a set of hyper parameters to be used when calculating a difference between an observation value and a restoration value is selected according to a relation between the physical quantities and a type of the target machine. The set of the hyper parameters can be prepared in advance, for example, in accordance with physical properties and a required robustness of the target machine 2. Accordingly, the abnormality of the target machine 2 can be detected as appropriate in accordance with the physical properties and the required robustness of the target machine 2.

### First Embodiment

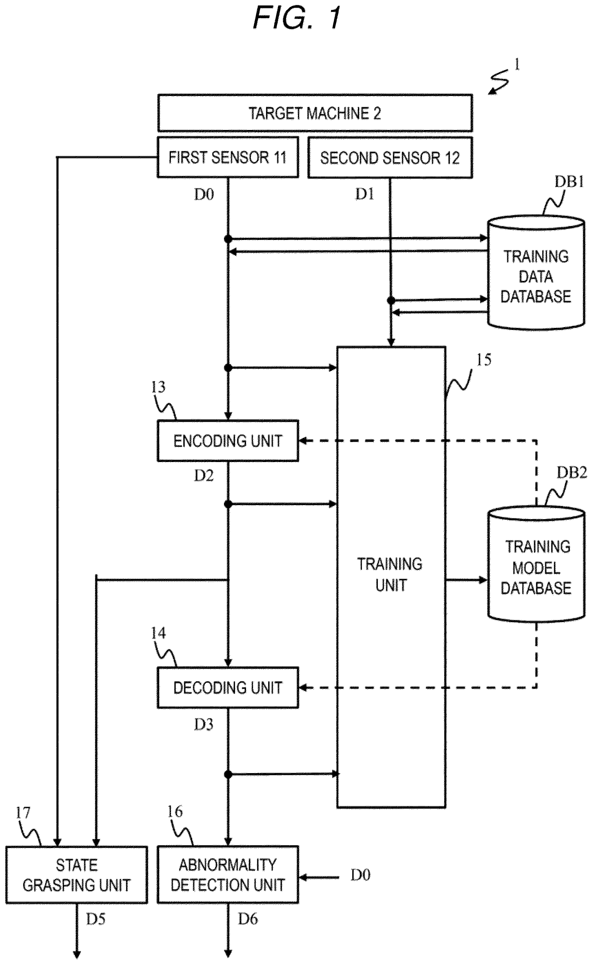

A first embodiment will be described with reference to FIGS. 1 to 6. FIG. 1 is a block diagram of the abnormality detection system 1 according to the present embodiment. In the present embodiment, the state of the target machine 2 such as a motor, a fan, a pump, a valve, and a slider is measured to monitor the state of target machine 2 and calculate an abnormality degree by a minimum number of the first sensors 11. A power source of the target machine 2 may be any electricity, hydraulic pressure, and pneumatic pressure.

The abnormality detection system 1 includes, for example, the first sensor 11, the second sensor 12, an encoding unit 13, a decoding unit 14, a training unit 15, an abnormality detection unit 16, a state grasping unit 17, a training data database DB1, and a training model database DB2.

The abnormality detection system 1 estimates the second data D1 output from the second sensor 12 which is not installed at the time of operating the target machine 2 (at the time of operating the machine learning model) from the first data D0 output from the first sensor 11 which can be installed at the time of operation. Therefore, the encoding unit 13 acquires latent expressions for estimating the second data D1 from the first data D0 at the time of training the machine learning model.

The decoding unit 14 restores the first data D0 output from the first sensor 11 using all the latent expressions obtained by the encoding unit 13.

At the time of training the machine learning model (sometimes referred to as a model training time or a training mode), the training is performed by acquiring the first data D0 and the second data D1 from the machine 2 attached with all of the first and second sensors 11 and 12 necessary for grasping the state of the target machine 2. At the time of training, the encoding unit 13 is trained so as to obtain, from the first data D0 of the first sensor 11 that can be installed at the time of operation, a latent expression that represents the second data D1 of the second sensor 12 which is not installed at the time of operation.

At the time of operation, the first data D0 from the first sensor 11 which is installed in the target machine 2 is used. The abnormality detection system 1 estimates the second data D1 of the second sensor 12 which is not installed in the target machine 2 by using the encoding unit 13.

The state grasping unit 17 of the abnormality detection system 1 grasps the state of the target machine 2 from the first data D0 of the first sensor which is installed in the target machine 2 and the second data (estimation value) of the second sensor 12 which is not installed in the target machine 2.

The state grasping unit 17 outputs an observation value or an estimation value of the first sensor 11 or the second sensor 12 as data D5. At the time of training, the state grasping unit 17 outputs the observation value of the first sensor 11 and the observation value of the second sensor 12. As will be described in embodiments to be described later, the state grasping unit 17 can also output the estimation value of the second sensor 12 at the time of training. The state grasping unit 17 outputs the observation value of the first sensor 11 and the estimation value of the second sensor 12 as data D5 at the time of operation.

Here, the observation value of the first sensor 11 is the first data D0 actually measured by the first sensor 11. The estimation value of the second sensor 12 is the second data D1 estimated from the first data.

The abnormality detection unit 16 of the abnormality detection system 1 calculates and outputs an abnormality degree D6 indicating whether an abnormality occurs in the target machine 2 on the basis of a difference between the first data D0 observed by the first sensor 11 and first data D0 restored by the encoding unit 13 and the decoding unit 14 constituting the machine learning model. The abnormality degree D6 can be used in other systems such as a production management system (not shown).

The training unit 15 learns parameters used in the encoding unit 13 and parameters used in the decoding unit 14 on the basis of training data stored in the training data database DB1, the first data D0 of the first sensor 11, and the second data D1 of the second sensor 12. Further, the training unit 15 updates the parameters used in the encoding unit 13 and the parameters used in the decoding unit 14 and stores the updated parameters in the training model database DB2 such that a predetermined loss function is minimized.

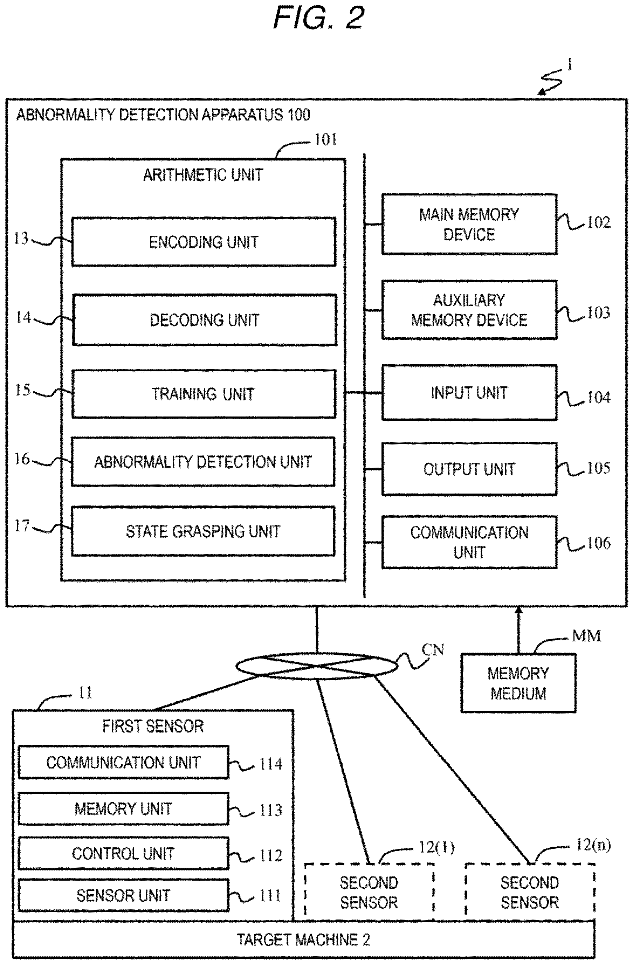

FIG. 2 illustrates a hardware configuration diagram of the abnormality detection system 1. The abnormality detection system 1 includes, for example, an abnormality detection apparatus 100, the first sensor 11, and the second sensor 12.

The abnormality detection apparatus 100 is implemented by a computer. The computer can be used as the abnormality detection apparatus 100 by causing the computer to execute a predetermined computer program. FIG. 2 illustrates an example of implementing the abnormality detection apparatus 100 from one computer, but instead, one or a plurality of abnormality detection apparatuses 100 may be formed from a plurality of computers. The computer may be a virtual computer.

The abnormality detection apparatus 100 is connected to the first and second sensors 11 and 12 via a communication network CN. Examples of the first and second sensors 11 and 12 include a microphone, a vibration sensor, a temperature sensor, a current sensor, a voltage sensor, a weight sensor, and a torque sensor. Here, a case in which the first sensor 11 is a microphone (sound sensor) and the second sensor 12 is a sensor that measures a physical quantity other than a sound will be described as an example.

The abnormality detection apparatus 100 includes, for example, an arithmetic unit 101, a main memory device 102, an auxiliary memory device 103, an input unit 104, an output unit 105, and a communication unit 106.

The arithmetic unit 101 includes one or a plurality of microprocessors, and implements a predetermined function as the abnormality detection apparatus 100 by reading the predetermined computer program stored in the auxiliary memory device 103 into the main memory device 102. The predetermined function is, for example, the encoding unit 13, the decoding unit 14, the training unit 15, the abnormality detection unit 16, and the state grasping unit 17.

The input unit 104 can include, for example, a keyboard, a touch panel, or a pointing device, and receives input from a user using the abnormality detection apparatus 100. The output unit 105 can include, for example, a monitor display, a speaker, or a printer, and provides information to the user.

The communication unit 106 communicates with the first and second sensors 11 and 12 via the communication network CN. The communication unit 106 can also communicate with another computer (not shown).

A memory medium MM is, for example, a flash memory or a hard disk, and transfers a computer program or data to the abnormality detection apparatus 100 for memory, and reads and stores the computer program or data from the abnormality detection apparatus 100. The memory medium MM may be directly connected to the abnormality detection apparatus 100, or may be connected to the abnormality detection apparatus 100 via the communication network CN.

Configurations of the first and second sensors 11 and 12 will be described. The first sensor 11 will be described as an example. The second sensor 12 can be implemented in the same manner. The first sensor 11 includes, for example, a sensor unit 111, a control unit 112, a memory unit 113, and a communication unit 114.

The sensor unit 111 is a microphone that detects a sound of the target machine 2. Therefore, in the following, the sensor unit 111 may be referred to as a microphone 111. Data of the sound detected by the sensor unit 111 is stored in the memory unit 113. The control unit 112 controlling the sensor 11 transmits the sound data stored in the memory unit 113 toward the abnormality detection apparatus 100.

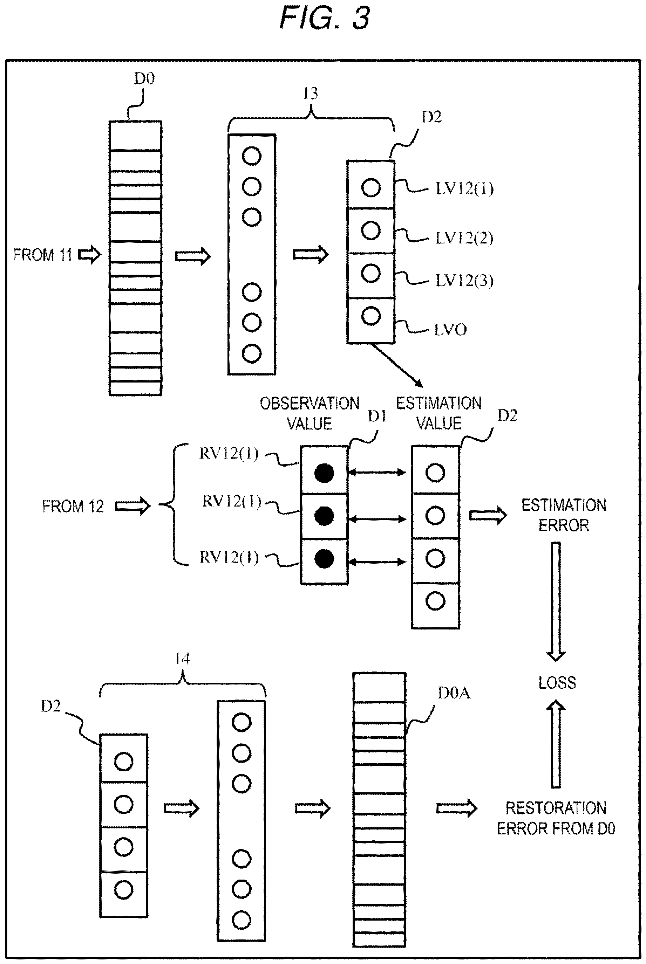

FIG. 3 illustrates a method of training the machine learning model. As illustrated in an upper side of FIG. 3, the first data D0 output from the first sensor 11 is input to the encoding unit 13. The encoding unit 13 calculates feature data of the input first data D0 and outputs encoded data D2. The encoded data D2 includes latent expressions (can also be referred to as latent variables) LV12(1) to LV12(3) and LV0 for restoring the first data from the input first data D0.

Here, four latent expressions are illustrated here for the sake of description, while more latent expressions are actually included. Among the encoded data D2, the predetermined latent expressions LV12(1) to LV12(3) are used to estimate the output of the second sensor 12 (the second data D1). A first predetermined latent expression LV12(1) is used, for example, to estimate output of a second sensor 12(1) such as a temperature sensor. A second predetermined latent expression LV12(2) is used, for example, to estimate output of a second sensor 12(2) such as a voltage sensor. A third predetermined latent expression LV12(3) is used, for example, to estimate output of a second sensor 12(3) such as a load weight sensor. The temperature sensor, the voltage sensor, and the load weight sensor are examples for explanation.

The other latent expression LV0 is not used to estimate the output of the second sensor 12, and is only used to restore the output of the first sensor 11. That is, only predetermined data LV12(1) to LV12(3) as a part of the encoded data D2 output from the encoding unit 13 is used to estimate the output of the second sensor 12, and remaining data LV0 is used to estimate the output of the first sensor 11 together with the predetermined data LV12(1) to LV12(3).

As illustrated in the center of FIG. 3, at the time of training the machine learning model, not only the first sensor 11 but also the second sensors 12(1) to 12(3) are attached to the target machine 2 and output data RV12(1) to RV12(3) as observation values.

The training unit 15 compares the data estimated from the predetermined latent expressions LV12(1) to LV12(3) with the observation data RV12(1) to RV12(3) measured by the actual second sensors 12(1) to 12(3), and calculates an estimation error which is a difference therebetween.

Meanwhile, the decoding unit 14 restores the first data D0 of the first sensor 11 from the encoded data D2 output from the encoding unit 13, and outputs restored first data D0A. Here, for the sake of understanding, a description will be given by changing to the code "D0" of the observed first data and the code "D0A" of the restored first data.

The training unit 15 compares the first data D0 output from the first sensor 11 and the first data D0A restored by the decoding unit 14, calculates a restoration error (reconstruction error) which is the difference therebetween, and adjusts the parameters of the encoding unit 13 and the parameters of the decoding unit 14 such that a total loss of the estimation error and the restoration error is minimized.

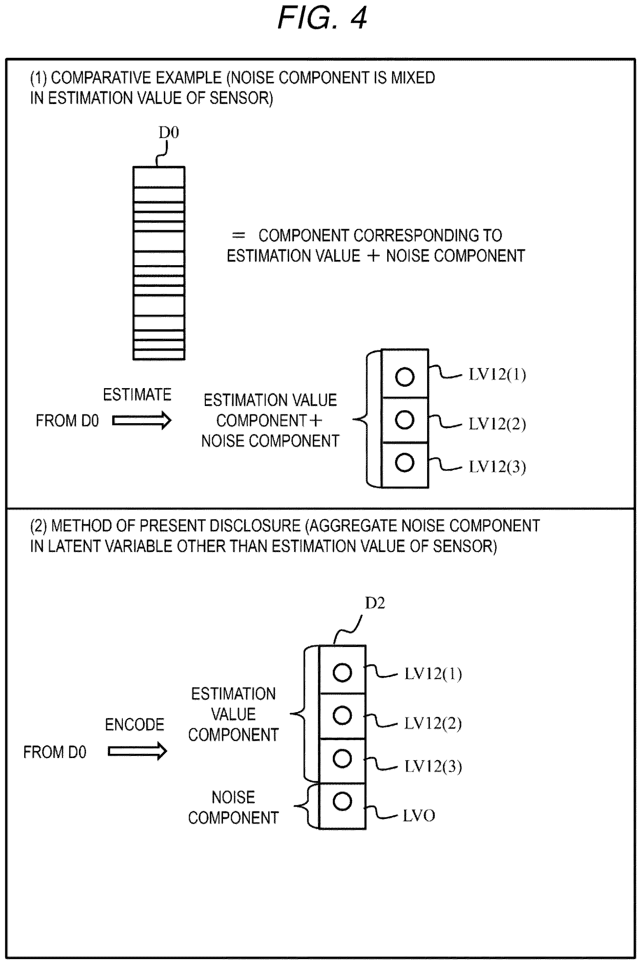

FIG. 4 is an explanatory diagram illustrating an effect of the present embodiment. (1) of FIG. 4 illustrates a comparative example. In the comparative example, the second data D1 output from the second sensor 12 is estimated using all of the latent expressions LV12(1) to LV12(3) obtained from the first data D0 output from the first sensor 11. Therefore, a variation added to the first data D0, even if unrelated to the second data D1, is reflected in the estimation of the second data D1.

For example, a case will be described in which the first sensor 11 measures an operation sound of the target machine 2 and an operation speed of the target machine is estimated from the operation sound. An operation sound of another apparatus near to the target machine 2 is not a measurement target of the first sensor 11, and is thus a noise. When the first sensor 11 detects the operation sound of the other apparatus included in the operation sound of the target machine 2, a noise component thereof is reflected in an estimation value of the operation speed.

In contrast, in the method of the present embodiment illustrated in (2) of FIG. 4, only a part of the latent expressions generated by the encoding unit 13 is used to estimate the second data D1 of the second sensor 12, and the other latent expression LV0 is not used to estimate the second data. Therefore, when the first data D0 input to the encoding unit 13 varies due to a cause unrelated to the second data D1 to be estimated, the variation is aggregated into the other latent expression LV0 which is not used for the estimation. Therefore, it is possible to confirm that the variation is unrelated to the estimation of the second data D1.

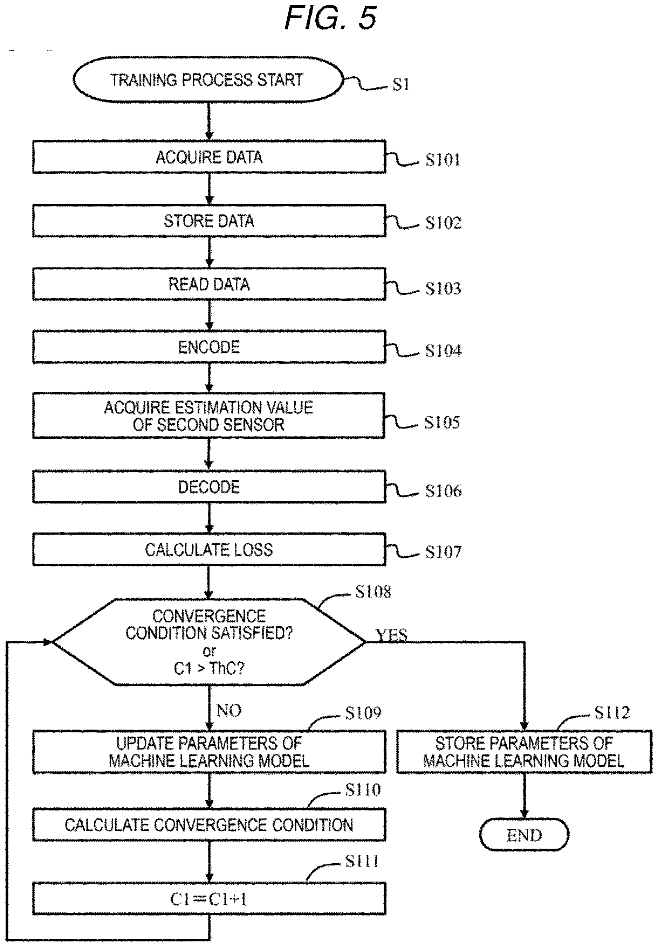

FIG. 5 is a flow chart of a training process S1. The abnormality detection system 1 acquires the first data D0 from the first sensor 11 (S101), and stores the acquired first data D0 in the auxiliary memory device 103 (S102).

The abnormality detection system 1 causes the main memory device 102 to read the first data D0 stored in the auxiliary memory device 103 (S103), and causes the encoding unit 13 to encode the first data D0 (S104). The abnormality detection system 1 estimates the second data D1 of the second sensor 12 from the predetermined latent expression of the latent expressions generated by the encoding unit 13 (S105).

The abnormality detection system 1 causes the decoding unit 14 to restore the first data D0 using all of the latent expressions generated by the encoding unit 13 (S106). The abnormality detection system 1 calculates, as a loss, the restoration error between the first data D0 input into the encoding unit 13 and the first data D0A restored by the decoding unit 14 and the estimation error between the second data observed by the second sensor 12 and the second data estimated from the predetermined latent expression (S107).

The abnormality detection system 1 repeatedly learns parameters of the machine learning model such that a value of the calculated loss is minimized (S109 to S111). These parameters of the machine learning model are stored in the training model database DB2 (S112).

That is, the abnormality detection system 1 determines whether a predetermined convergence condition is satisfied or an iteration count C1 of the present process exceeds an upper limit value ThC (S108). When the convergence condition is not satisfied and the iteration count C1 is equal to or less than the upper limit value ThC, the training unit 15 updates the parameters of the machine learning model (S109), calculates the convergence condition (S110), increments the iteration count C1 by 1, and returns to step S108.

When the predetermined convergence condition is satisfied (S108: YES), the abnormality detection system 1 stores the parameters of the machine learning model to the training model database DB2 (S112).

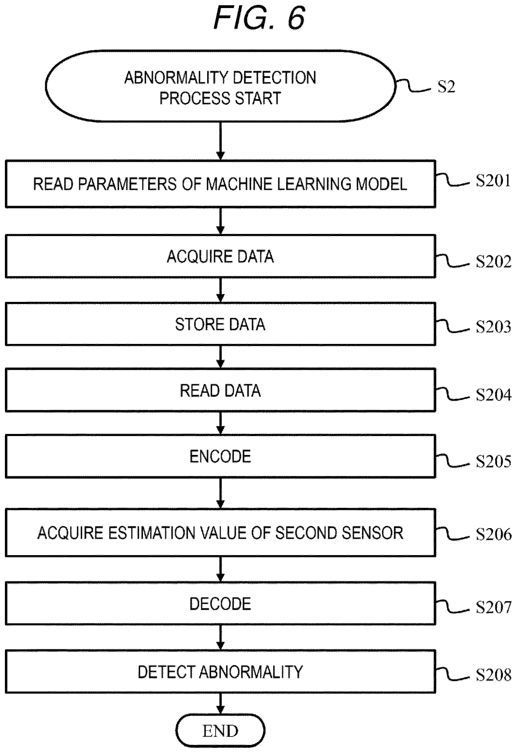

FIG. 6 is a flow chart of a process S2 for detecting the abnormality of the target machine 2. The abnormality detection process S2 corresponds to a process at the time of operation in which the machine learning model is operated. At the time of operation according to the present embodiment, only the first sensor 11 is provided in the target machine 2, and the second sensor 12 is not provided in the target machine.

The abnormality detection system 1 reads the parameters of the machine learning model from the training model database DB2 and sets the read parameters to the encoding unit 13 and the decoding unit 14 (S201) . The abnormality detection system 1 acquires the first data D0 from the first sensor 11 (S202) and stores the acquired first data D0 in the auxiliary memory device 103 (S203).

The abnormality detection system 1 causes the main memory device 102 to read the first data D0 stored in the auxiliary memory device 103 (S204), and causes the encoding unit 13 to encode the first data D0 to generate the latent expressions (S205).

The abnormality detection system 1 estimates the second data D1 of the second sensor 12 from the predetermined latent expression of the latent expressions generated by the encoding unit 13 (S206).

Meanwhile, the decoding unit 14 restores the first data D0 (D0A in FIG. 3) using all of the latent expressions generated by the encoding unit 13 (S207).

In step S208, the abnormality detection system 1 treats the restoration error of the first data D0 as the abnormality degree, and determines whether the target machine 2 is in an abnormal state or a normal state from a magnitude of the abnormality degree. Further, the abnormality detection system 1 grasps the state of the target machine 2 from the first data which is the observation value and the second data D1 which is the estimation value, and estimates a cause of the case where it is determined that the target machine 2 is in the abnormal state.

For example, when it is determined from the operation sound of the target machine 2 that the target machine 2 is in the abnormal state, the abnormality detection system 1 can estimate the cause of the abnormality of the target machine 2 from the estimation value of the second data D1 output from the second sensor 12, such as an operation speed, a temperature, or a voltage. For example, in the case where it is determined from the operation sound that the target machine 2 is abnormal, when a temperature of the target machine 2 is higher than a predetermined temperature, the abnormality detection system 1 can estimate that the abnormality of the target machine 2 is caused by the temperature.

According to the present embodiment constituted in this manner, the second data D1 of the second sensor 12 which is not used at the time of operation can be estimated on the basis of the first data D0 of the first sensor 11 which is used at the time of operation. Therefore, even when the target machine 2 cannot be attached with a plurality of sensors due to limitation of sensor attachment or the like, it is possible to detect the abnormality of the target machine 2 from the first and second data D0 and D1 of the plurality of sensors and to monitor the state thereof.

In the present embodiment, since it is only necessary to attach a part of the first sensors 11 of a sensor group necessary for monitoring the target machine 2 to the target machine 2, it is possible to reduce a purchase cost and an attachment cost of the sensors. As a result, it is possible to reduce a cost of the abnormality detection system 1.

In the present embodiment, since the second data D1 of the second sensor 12 is estimated from the predetermined latent expression which is a part of the latent expressions of the machine learning model, even when a noise unrelated to the second sensor 12 is included in the first data D0 of the first sensor 11, an influence of the noise on the estimation of the second data D1 can be reduced, and reliability is improved.

### Second Embodiment

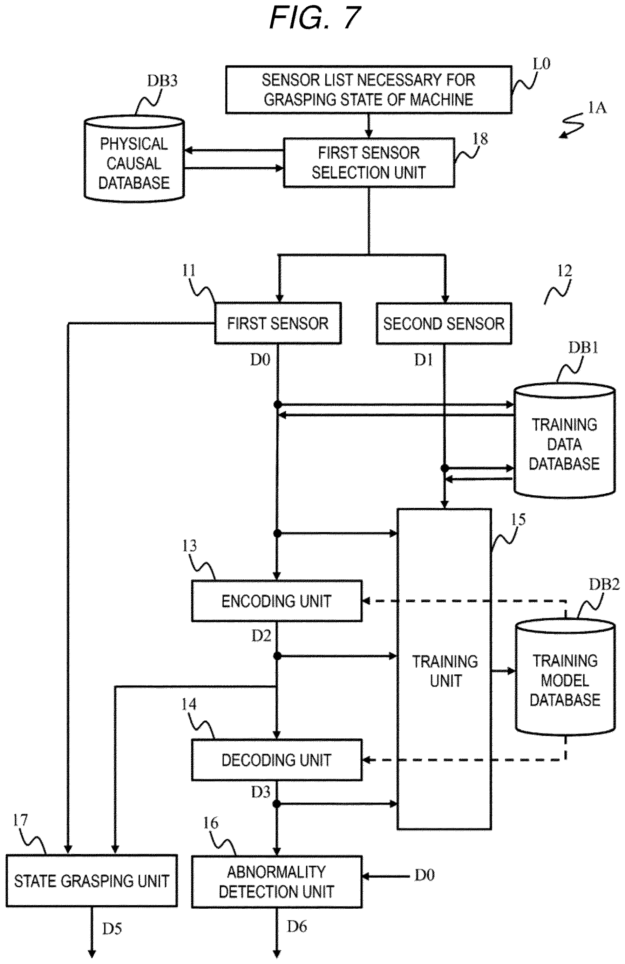

A second embodiment will be described with reference to FIGS. 7 to 10. In the following embodiments including the present embodiment, differences from the first embodiment will be mainly described. In the present embodiment, a sensor to be selected as the first sensor 11 is selected from a plurality of first sensor candidates by using a physical causal database DB3 that defines a causal relation of the physical quantities.

FIG. 7 is a block diagram of an abnormality detection system 1A according to the present embodiment. The abnormality detection system 1A includes all of configurations of the abnormality detection system 1 illustrated in FIG. 1 and is added with a first sensor selection unit 18 and the physical causal database DB3.

The first sensor selection unit 18 receives a sensor list L0 defining sensors necessary for grasping the state of the target machine 2, and then selects the first sensor 11 from the sensor group listed in the sensor list L0 with reference to the physical causal database DB3. A sensor that is not selected as the first sensor 11 in the sensor group listed in the sensor list L0 is the second sensor.

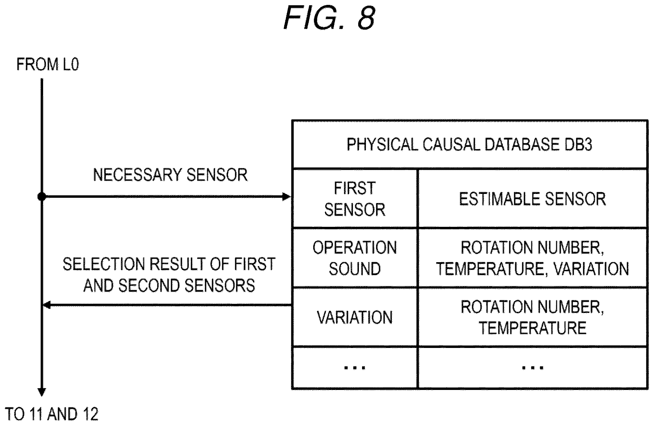

FIG. 8 illustrates a method for selecting the first sensor 11. The first sensor selection unit 18 collates the sensor group listed in the sensor list L0 with the physical causal database DB3, and selects the first sensor 11 and the second sensor 12 that can most efficiently grasp the state of the target machine 2. To most efficiently grasp the state of the target machine 2 means to grasp the state of the target machine 2 by the smallest number of sensors.

An example will be described. In the sensor list L0, a sensor for detecting a motor rotation number, a temperature sensor, a vibration sensor, a sensor for detecting a motor acceleration, and a sensor for detecting the operation sound are described as types of the sensors necessary for grasping the state of the target machine 2. That is, physical quantities necessary for grasping the state of the target machine 2 are defined in the sensor list L0.

The physical causal database DB3 illustrates causal relations between a plurality of the physical quantities. For example, a motor rotation number of a machine may affect the operation sound but is not affected by the operation sound. It is possible to select the first sensor 11 that can efficiently grasp the state of the target machine 2 using such physical causal relations. The physical causal relations may be manually set in advance by an administrator or the like of the abnormality detection system 1A, or may be semi-automatically or automatically created by simulation software or the like.

The present embodiment constituted in this manner also achieves the same operational effect as that of the first embodiment. Further, in the present embodiment, it is possible to determine a sensor having a minimum configuration on the basis of the sensor list L0 illustrating the sensor group necessary for grasping the state of the target machine 2 (measurement values are necessary physical quantities). This improves convenience of the user using the abnormality detection system 1A.

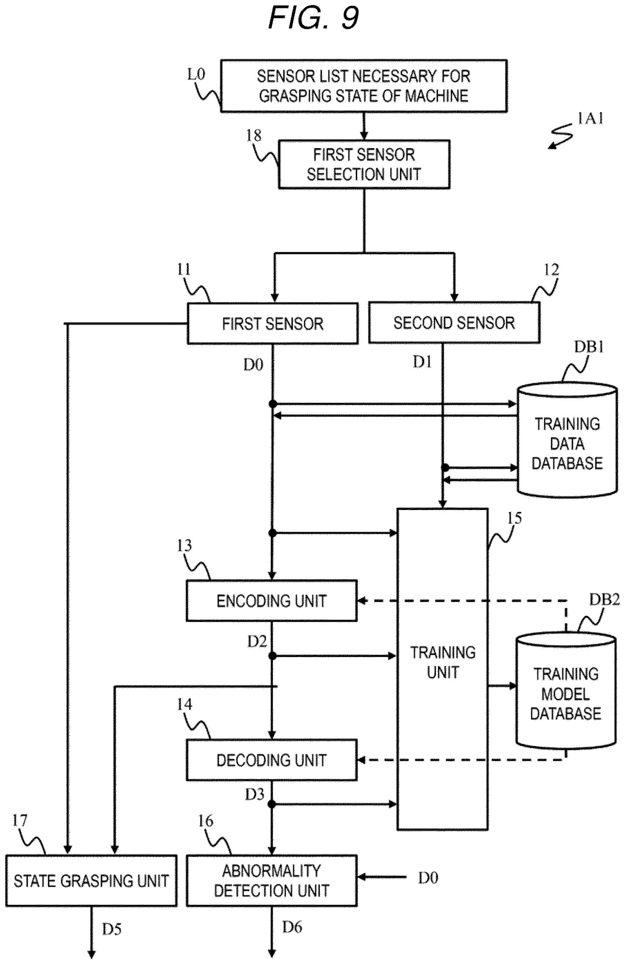

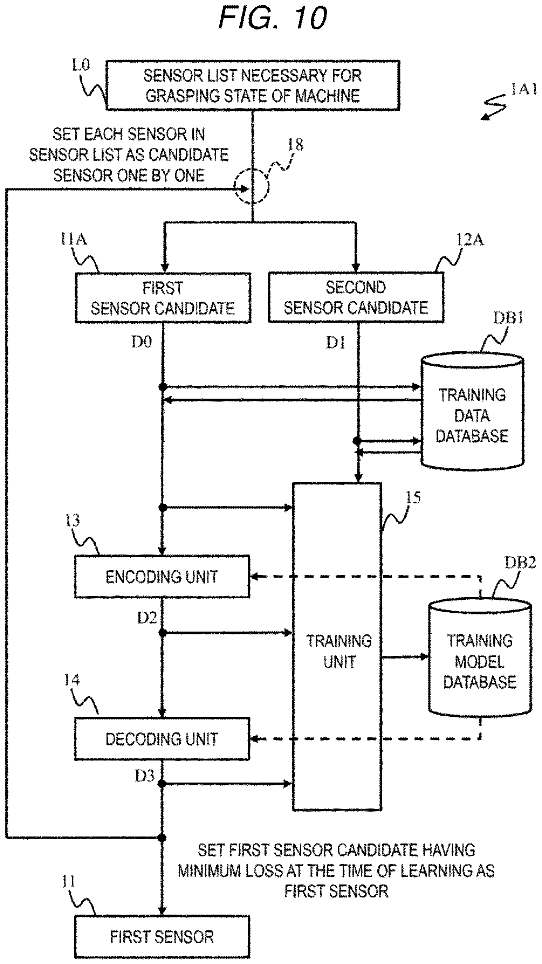

A modification of the present embodiment will be described with reference to FIGS. 9 and 10. In the present modification, the first sensor 11 is selected from the sensor group listed in the sensor list L0 without using the physical causal database DB3. The same as the above, the sensor that is not selected as the first sensor 11 is the second sensor 12.

FIG. 9 is a block diagram of an abnormality detection system 1A1 according to the present modification. The abnormality detection system 1A1 includes the first sensor selection unit 18 but does not include the physical causal database DB3.

FIG. 10 illustrates a method for selecting the first sensor 11 by the first sensor selection unit 18. The first sensor selection unit 18 selects one sensor from the sensor group listed in the sensor list L0 as a first sensor candidate 11A and sets a sensor that is not selected as a second sensor candidate 12A. Then, the abnormality detection system 1A1 calculates a restoration error between an observation value D0 and a restoration value D3 of the first sensor candidate 11A and an estimation error between an observation value of the second sensor candidate 12A and an estimation value estimated from the predetermined latent expression generated by the encoding unit 13.

The abnormality detection system 1A1 calculates a loss at the time of training while changing the first sensor candidate 11A, and selects a first sensor candidate 11A having the minimum loss as the first sensor 11.

The present modification constituted in this manner also achieves the same operational effect as that of the present embodiment. Further, in the present modification, since the physical causal database DB3 is not used, it is not necessary to prepare the physical causal database DB3 in advance. Therefore, the present modification improves convenience of a user using the abnormality detection system 1A1.

### Third Embodiment

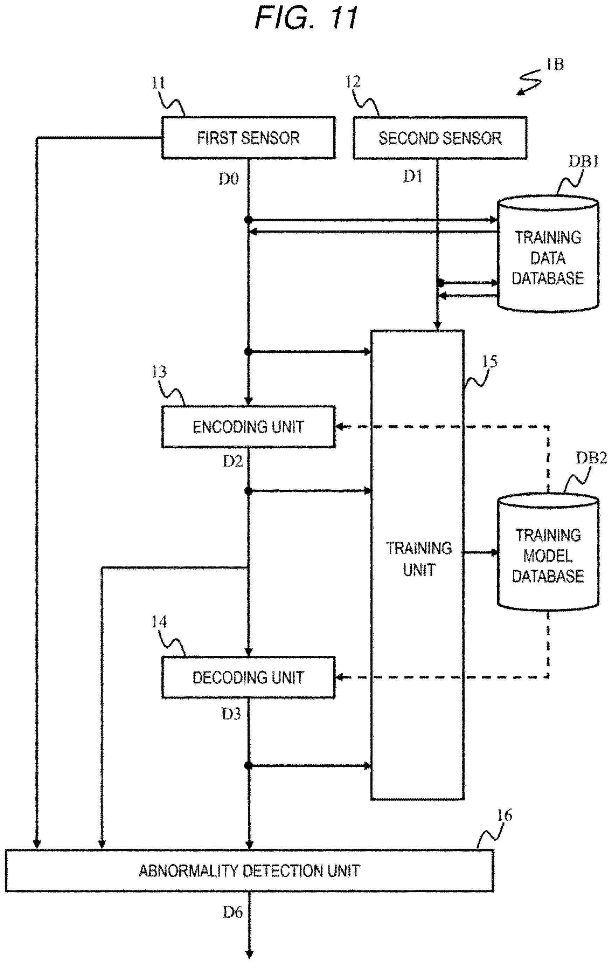

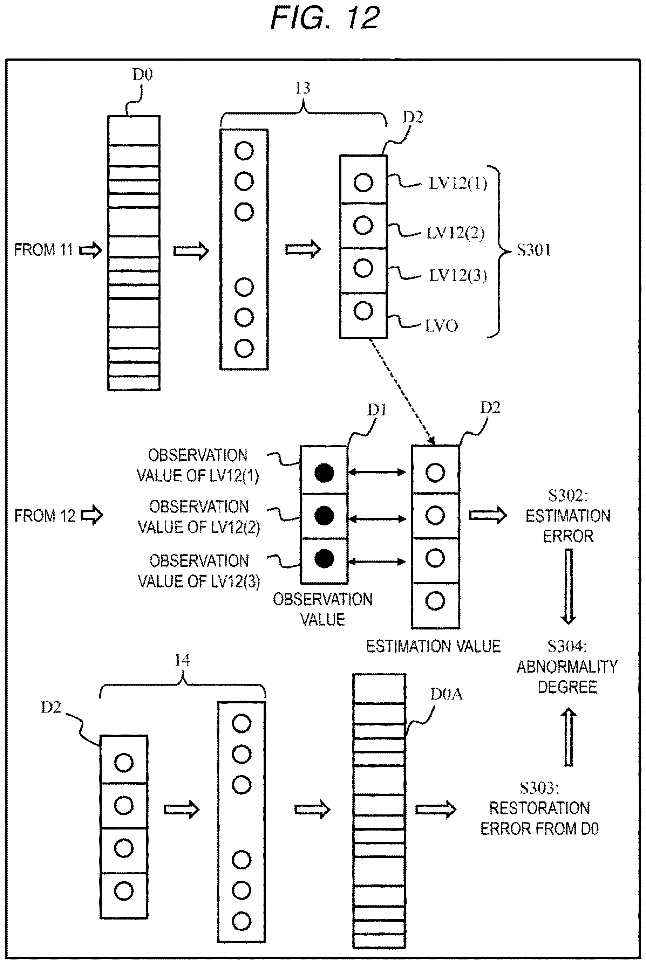

A third embodiment will be described with reference to FIGS. 11 and 12. An abnormality detection system 1B according to the present embodiment calculates the abnormality degree using the estimation error of the second data D1 in addition to the restoration error of the first data D0 when detecting the abnormality of the target machine 2.

FIG. 11 is a block diagram of an abnormality detection system 1B according to the present embodiment. FIG. 12 illustrates a method for detecting the abnormality. In the present embodiment, not only at the time of training but also at the time of operating the machine learning model, the first sensor 11 and the second sensor 12 are provided in the target machine 2, and data of each is output as an observation value.

As illustrated in an upper side of FIG. 12, at the time of training the machine learning model, the abnormality detection system 1B determines the parameters of the machine learning model, such that the second data of the second sensor 12 can be estimated on the basis of the predetermined latent expression of the latent expressions based on the first data D0 of the first sensor 11 (S301).

At the time of operating the machine learning model, the target machine 2 is provided with the first sensor 11 and the second sensor 12. The first sensor 11 outputs the first data D0 as the observation value, and the second sensor 12 outputs the second data D1 as the observation value.

At the time of operating the machine learning model, the abnormality detection system 1B compares the second data D1 observed by the second sensor 12 and the second data D1 estimated from the first data D0 and calculates the estimation error (S302).

The abnormality detection system 1B calculates the restoration error between the first data D0 and the first data D0A restored from the first data D0 (S303), and determines the abnormality degree of the target machine 2 from the estimation error and the restoration error (S304).

The present embodiment constituted in this manner also achieves the same operational effect as that of the first embodiment. Further, in the present embodiment, the abnormality degree is calculated by including the estimation error in addition to the restoration error, and thus it is possible to detect the abnormality of the target machine 2 at higher accuracy than the method of calculating the abnormality degree by using only the restoration error. In the present embodiment, it is possible to detect the abnormality of the target machine 2 from the restoration error of the first data D0. Further, it is possible to estimate the cause of the abnormality from the first data D0 (observation value) and the second data D1 (observation value). Further, in the present embodiment, it is possible to detect the abnormality at high accuracy using the estimation error between the second data D1 (observation value) and the second data D1 (estimation value).

### Fourth Embodiment

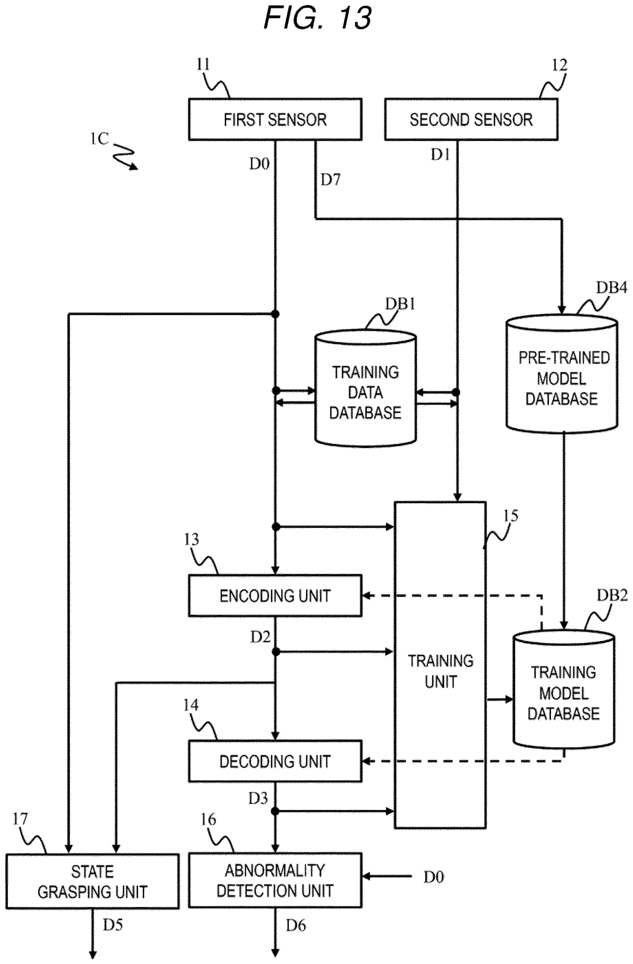

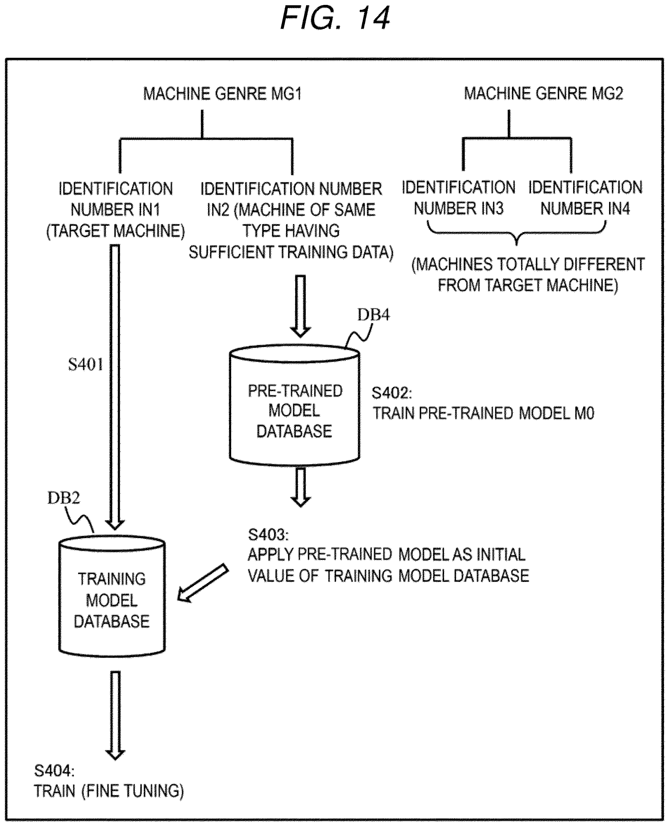

A fourth embodiment will be described with reference to FIGS. 13 and 14. In the present embodiment, when data on the target machine 2 is small, a training model created from data on a machine of the same type as the target machine 2 is used as an initial model, and the initial model is finely tuned with data obtained from the target machine 2.

FIG. 13 is a block diagram of an abnormality detection system 1C. The abnormality detection system 1C according to the present embodiment includes a pre-trained model database DB4. The pre-trained model database DB4 stores a pre-trained model M0 (refer to FIG. 14)

The pre-trained model M0 will be described with reference to FIG. 14. The pre-trained model M0 is a training model generated for a machine of the same type, i.e., a machine that belongs to the same machine genre as the target machine 2 but has a different individual identification number.

The machine genre can be classified from information including a machine type, a vendor name, a driving method, and the like, for example, as in "hydraulic type press machine made by A" and "electric type die casting system made by B". Alternatively, the machine genre may be classified from the machine type and the driving method. Furthermore, for example, in the case of a machine that is highly standardized in the industry, the machine genre may be classified by only the machine type.

In the example of FIG. 14, two machine genres MG1 and MG2 are illustrated. For example, the machine genre MG1 and the machine genre MG2 are products of the same vendor, but have driving methods different from each other, such as a hydraulic type and an electric type. It is assumed that a factory of a user who uses the abnormality detection system 1C is provided with machines belonging to the machine genres MG1 and MG2.

The machine genre MG1 includes two identification numbers IN1 and IN2. Meanwhile, the other machine genre MG2 includes two identification numbers IN3 and IN4. The target machine 2 is a machine having the identification number IN1 of the machine genre MG1.

The abnormality detection system 1 trains the training model in the training model database DB2 on the basis of the data measured by the first and second sensors 11 and 12 for the target machine 2 (MG1, IN1) (S401) as described above.

Here, in a case where the target machine 2 has just been introduced recently and a data amount measured for the target machine 2 is small, it takes time to generate a machine learning model at high accuracy. Therefore, the abnormality detection system 1 uses, as the pre-trained model M0, a machine learning model generated for a machine of the same type (MG1, IN2) that has an identification number IN different from that of the target machine 2 but belongs to the same machine genre MG1 (S402).

The abnormality detection system 1 acquires the pre-trained model M0 stored in the pre-trained model database DB4 and uses the pre-trained model M0 as an initial value of the machine learning model used to monitor the target machine 2 (S403).

Then, the abnormality detection system 1 finely tunes the machine learning model (= the initial value is the pre-trained model M0) on the basis of the data measured for the target machine 2 by the first sensor 11 and the second sensor 12 (S404).

The present embodiment constituted in this manner also achieves the same operational effect as that of the first embodiment. Further, in the present embodiment, when amounts of the first and second data D0 and D1 measured for the target machine 2 are small, the pre-trained model created for the machine of same type as the target machine 2 is used as the initial value of the machine learning model and is finely tuned by the data measured for the target machine 2, and thus it is possible to create an appropriate machine learning model in a shorter time.

### Fifth Embodiment

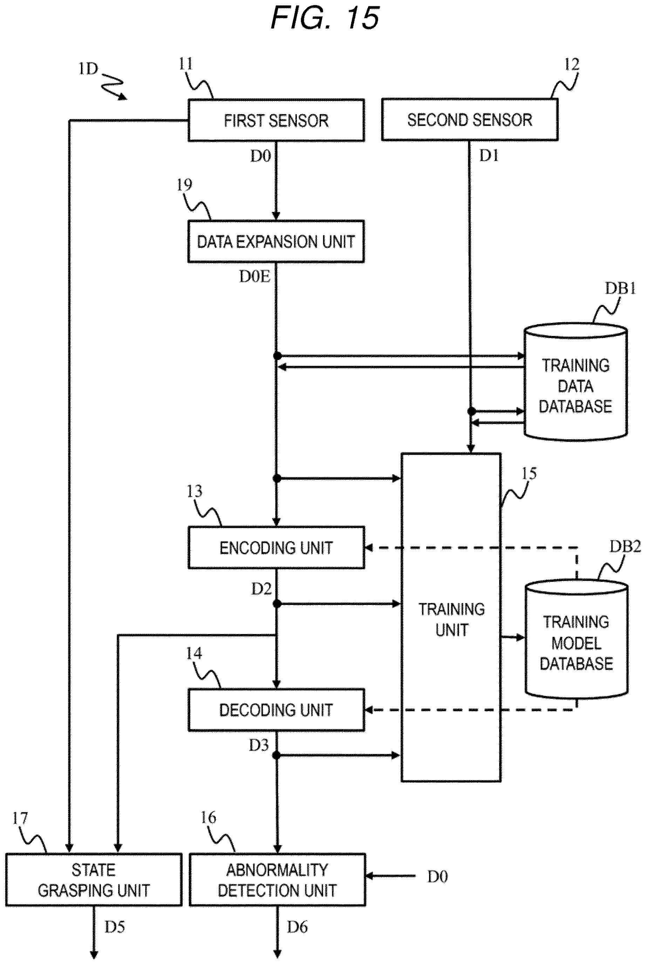

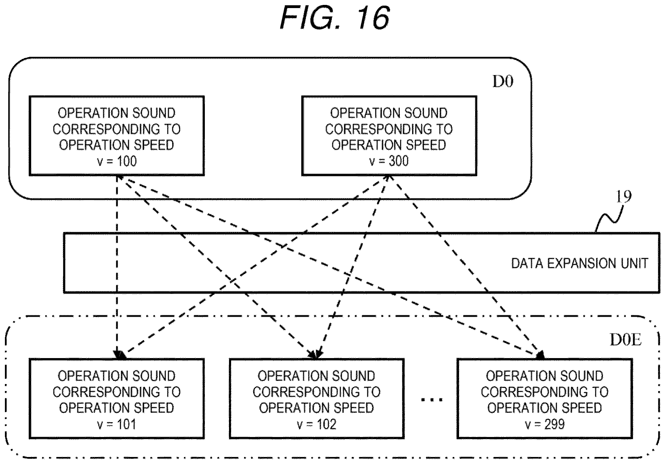

A fifth embodiment will be described with reference to FIGS. 15 and 16. In the present embodiment, when the physical quantities measured for the target machine 2 continuously change in accordance with the state of the target machine 2, data between the observed data is interpolated.

FIG. 15 is a block diagram of an abnormality detection system 1D according to the present embodiment. The abnormality detection system 1D includes a data expansion unit 19 for expanding the first data D0 detected by the first sensor 11. In the present embodiment, both the first sensor 11 and the second sensor 12 can be used at the time of training the machine learning model used to grasp the state of the target machine 2. At the time of operating the machine learning model, the first sensor 11 may be used, and the second sensor 12 may or may not be used. That is, at the time of operation, the second data of the second sensor 12 may be estimated on the basis of the first data.

FIG. 16 illustrates a method for expanding the data. For example, a case will be described in which the first sensor 11 is a microphone for measuring the operation sound, and the operation sound of the target machine 2 changes in accordance with a continuously changing state such as the temperature, the operation speed, and the pressure of the target machine 2.

In this case, it is difficult to measure all the operation sounds corresponding to the continuous change of the target machine 2. Therefore, the abnormality detection system 1D generates expansion data (interpolation data) D0E by using a data expansion method such as mix-up on the basis of first data D0 of an operation sound measured in one state of the target machine 2 (an operation sound at an operation speed v100) and first data D0 of an operation sound measured in another state of the target machine 2 (an operation sound at an operation speed v300).

In this embodiment, unmeasured data such as data of an operation sound at an operation speed v101, data of an operation sound at an operation speed v102, data of an operation sound at an operation speed v103, ..., and data of an operation sound at an operation speed v299 can be acquired in advance.

The present embodiment constituted in this manner also achieves the same operational effect as that of the first embodiment. Further, in the present embodiment, even when the first data D0 output from the first sensor 11 changes in accordance with a continuous state change of the target machine 2, the first data D0 of the first sensor 11 can be expanded and acquired in advance, and the machine learning model can be created in an early stage.

### Sixth Embodiment

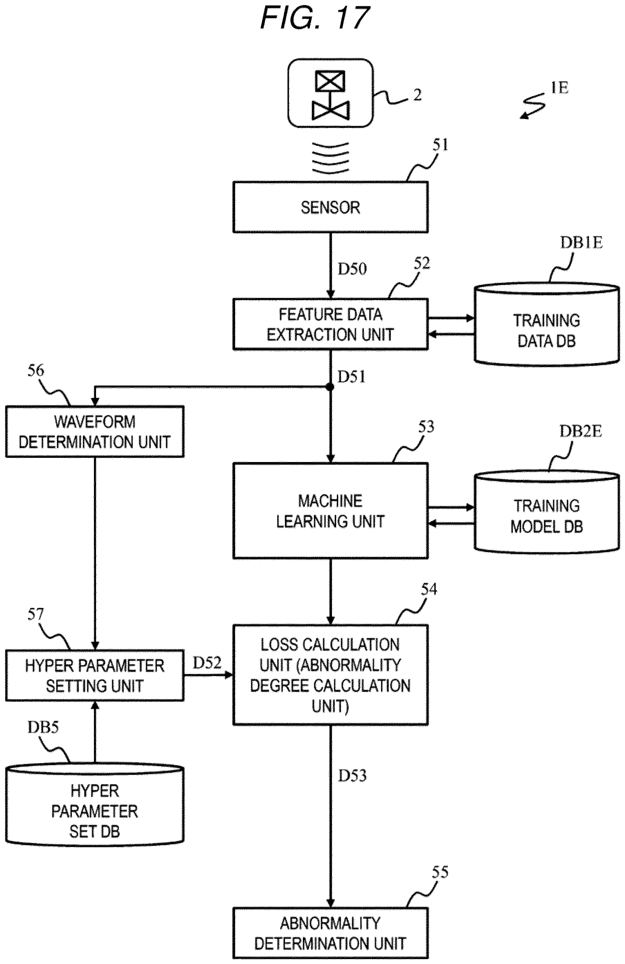

A sixth embodiment will be described with reference to FIGS. 17 to 22. In the present embodiment, it is possible to improve the abnormality detection accuracy and to satisfy the required robustness by optimizing a loss function used in the machine learning model in accordance with characteristics of the target machine 2.

FIG. 17 is a block diagram of an abnormality detection system 1E at the time of training. The abnormality detection system 1E may include, for example, a sensor 51, a feature data extraction unit 52, a machine learning unit 53, a loss calculation unit 54, an abnormality determination unit 55, a waveform determination unit 56, a hyper parameter setting unit 57, a training data database DB1E, a training model database DB2E, and a hyper parameter set database DB5.

Here, a sensor such as a microphone that measures the operation sound of the target machine 2 will be described as an example of the sensor 51. When a vibration is measured instead of the operation sound, a vibration sensor may be used as the sensor 51.

The feature data extraction unit 52 extracts feature data vector (hereinafter, referred to as feature data) D51 from data 50 measured by the sensor 51, and stores the extracted feature data D51 in the training data database DB1E.

The machine learning unit 53 trains the machine learning model stored in the training model database DB2E using the feature data D51 extracted by the feature data extraction unit 52.

The loss calculation unit 54 calculates a loss between an observation value of the sensor 51 and a restoration value restored by the machine learning model. It is possible to determine how abnormal the target machine 2 is on the basis of a magnitude of the loss, and thus the loss calculation unit 54 may be referred to as an abnormality degree calculation unit 54.

The abnormality determination unit 55 determines whether the target machine 2 is abnormal on the basis of data D53 output from the loss calculation unit 54 (loss or abnormality degree).

The waveform determination unit 56 determines a waveform pattern registered in advance to which a waveform pattern of the operation sound corresponds, on the basis of the extracted feature data D51. The hyper parameter setting unit 57 refers to the hyper parameter set database DB5 to select one hyper parameter set on the basis of a determination result of the waveform determination unit 56, and sets the selected hyper parameter set D52 in the loss calculation unit 54.

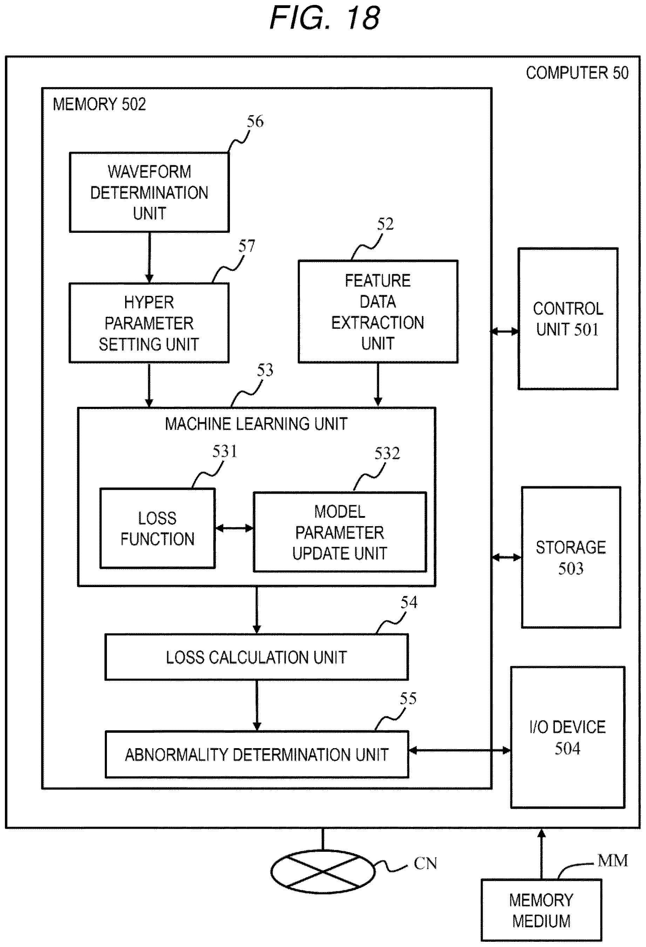

FIG. 18 is a hardware configuration diagram when the abnormality detection system 1E is implemented using a computer 50.

The computer 50 includes, for example, a control unit 501, a memory unit 502, a storage 503, and an input/output device (I/O device) 504, and is connected to the communication network CN. In addition, the computer 50 can be connected to the memory medium MM, and can transmit and receive a computer program or data between the memory medium MM and the memory 502 or the storage 503.

A predetermined computer program stored in the storage 503 is read into the memory 502 and executed by the control unit (arithmetic unit) 501, thereby implementing the feature data extraction unit 52, the machine learning unit 53, the loss calculation unit 54, and the abnormality determination unit 55. A part or all of the predetermined computer program can be stored in the memory medium MM.

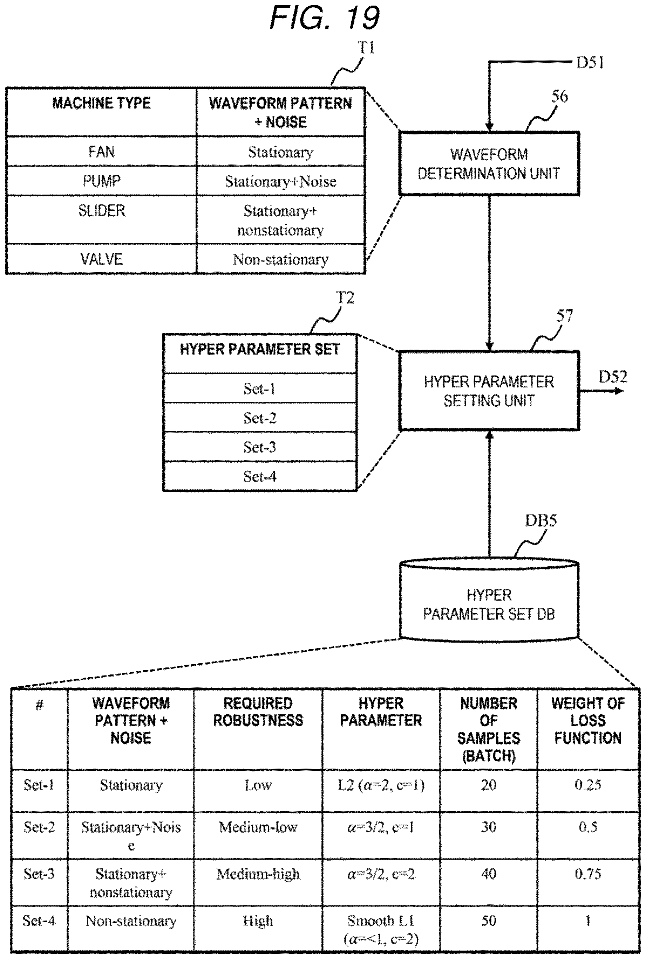

FIG. 19 illustrates a method for setting the hyper parameter set in accordance with the characteristics and the required robustness of the target machine 2 in the loss calculation unit 54.

The waveform determination unit 56 selects a waveform pattern and the like corresponding to the machine type on the basis of a table T1 illustrating a combination of the machine type and the waveform pattern and the like. The waveform pattern and the like indicate a tendency of a waveform pattern and a noise for each target machine 2. For example, a fan outputs a stationary operation sound and hardly generates an abrupt sound (noise). A pump outputs a stationary operation sound but may also generate an abrupt sound sometimes. A slider generates different sounds during operation and during stop, and thus a stationary operation sound and a non-stationary operation sound coexist. A valve operates intermittently, and thus has a non-stationary operation sound. The waveform determination unit 56 may determine a machine type to which the target machine 2 corresponds from the feature data D51 of the operation sound of the target machine 2, or by acquiring a signal indicating the type of the target machine 2. For example, when the abnormality detection system 1E is installed at a factory, the type of the target machine 2 may be set manually.

The hyper parameter setting unit 57 refers to the hyper parameter set database DB5 on the basis of the determination result of the waveform determination unit 56 (the corresponding waveform pattern and the like), thereby identifying a hyper parameter set to be set in the loss calculation unit 54.

The hyper parameter set database DB5 manages, for example, a set number, the waveform pattern and the like, the required robustness, the hyper parameter, the number of samples, and a weight of the loss function in association with one another.

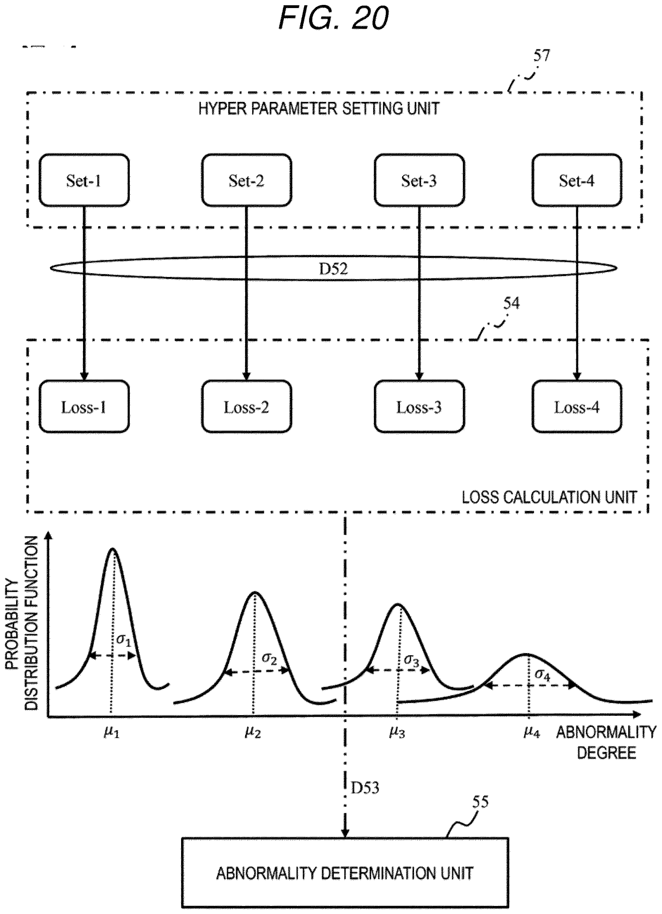

The required robustness illustrates the required robustness for determining the abnormality of the target machine 2. The required robustness includes, for example, "high", "low", "medium-low", and "medium-high". As illustrated in FIG. 20, the hyper parameter includes, for example, a standard deviation δ and an average value µ of a probability distribution function used by the loss calculation unit 54.

The hyper parameter setting unit 57 selects a hyper parameter set corresponding to the determined waveform pattern and the like, and sets the hyper parameter and the weight of the loss function included in the selected hyper parameter set in the loss calculation unit 54.

As illustrated in FIG. 20, in a case such as a fan in which the operation sound is stable and is hardly mixed with a noise, it is not necessary to increase the required robustness, and thus the required robustness is set low. Therefore, in this case, a hyper parameter set is selected such that a range determined as normal by the loss calculation unit 54 is narrowed (Set-1).

In contrast, in a case such as a valve that operates irregularly and outputs a non-stationary operation sound, the required robustness increases. This is because that since the operation sound of the valve is not a stable pattern, there is a high possibility that the valve is erroneously determined to be abnormal if the required robustness is lowered. In this case, a hyper parameter is selected such that the range determined as normal by the loss calculation unit 54 is widened (Set-4). A hyper parameter set used in a case where the target machine 2 is a pump or a slider is an intermediate value has a range determined to be normal by the loss calculation unit 54 that is between the case of a fan and the case of a valve.

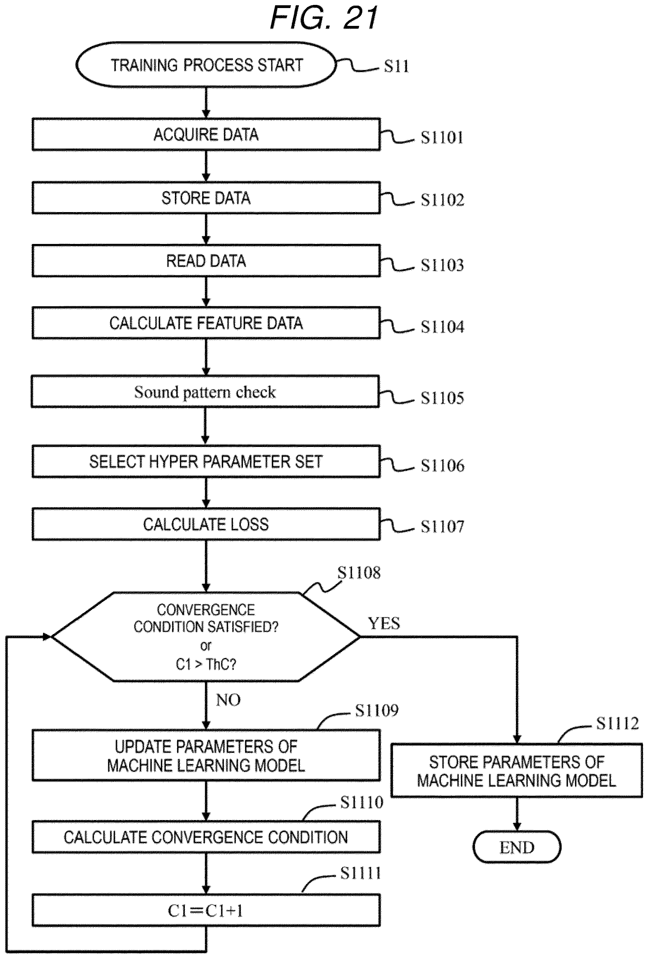

FIG. 21 is a flow chart illustrating a process S11 at the time of training. The abnormality detection system 1E acquires the data D50 measured by the sensor 51 (S1101), and stores the acquired data D50 in the storage 503 (S1102). The abnormality detection system 1E reads the data D50 from the storage 503 to the memory 502 (S1103), and causes the feature data extraction unit 52 to extract the feature data D51 (S1104).

The abnormality detection system 1E causes the waveform determination unit 56 to determine the waveform pattern and the like of the feature data D51 (S1105), and causes the hyper parameter setting unit 57 to select the hyper parameter set in accordance with the waveform pattern and the like (S1106).

The loss calculation unit 54 uses the hyper parameter set that is set by the hyper parameter setting unit 57 to calculate the loss of the machine learning model (S1108).

The abnormality detection system 1E repeatedly learns the parameters of the machine learning model such that a value of the calculated loss is minimized (S1109 to S1111). These parameters of the machine learning model are stored in the training model database DB2E (S1112).

That is, the abnormality detection system 1E determines whether the predetermined convergence condition is satisfied or the iteration count C1 of the present process exceeds the upper limit value ThC (S1108). When the convergence condition is not satisfied and the iteration count C1 is equal to or less than the upper limit value ThC, the machine learning unit 53 updates the parameters of the machine learning model (S1109), calculates the convergence condition (S1110), increments the iteration count C1 by 1, and returns to step S1108.

When the predetermined convergence condition is satisfied (S1108: YES), the abnormality detection system 1E stores the parameters of the machine learning model to the training model database DB2E (S1112).

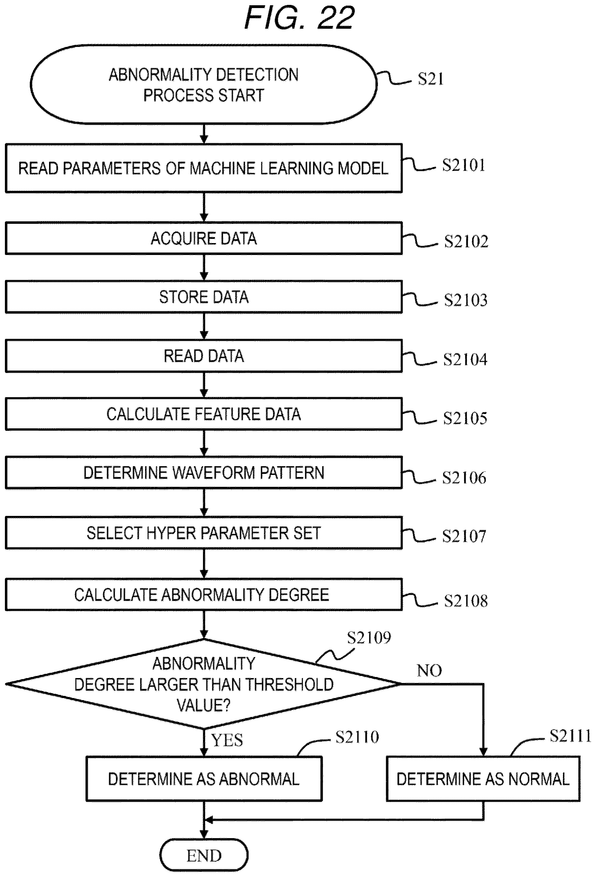

FIG. 22 is a flow chart of a process S21 for detecting the abnormality of the target machine 2. The abnormality detection system 1E reads and sets the parameters of the machine learning model from the training model database DB2E (S2101).

The abnormality detection system 1E acquires the data D50 from the sensor 51 (S2102), and stores the acquired data D50 in the storage 503 (S2103).

The abnormality detection system 1E reads the data D50 stored in the storage 503 into the memory 502 (S2104), and causes the feature data extraction unit 52 to extract the feature data D51 (S2105).

The abnormality detection system 1E causes the waveform determination unit 56 to determine the waveform pattern and the like (S2106), and causes the hyper parameter setting unit 57 to set the hyper parameter set in accordance with the determination result in the loss calculation unit 54 (S2107).

The abnormality detection system 1E causes the loss calculation unit 54 to calculate the abnormality degree by a method according to properties of the target machine 2 (S2108). The abnormality detection system 1E causes the abnormality determination unit 55 to determine whether the calculated abnormality degree is larger than a predetermined threshold value (S2109).

When the calculated abnormality degree is larger than the predetermined threshold value (S2109: YES), the abnormality determination unit 54 determines that the target machine 2 is in the abnormal state (S2110). In contrast, when the calculated abnormality degree is equal to or less than the predetermined threshold value (S2109: NO), the abnormality determination unit 54 determines that the target machine 2 is in the normal state (S2111).

According to the present embodiment constituted in this manner, the hyper parameter set selected in accordance with the type of the target machine 2 can be set in the loss calculation unit 54, and thus the abnormality of the target machine 2 can be detected more appropriately.

In the present embodiment, the robustness is determined according to a degree of change in the physical quantities measured for the target machine 2 (whether the physical quantities are stationary or non-stationary, whether noise is mixed, or the like), and thus it is possible to detect the abnormality according to the properties of the target machine 2.

The present embodiment can be combined with the first to the fifth embodiments. For example, also in the present embodiment, the first sensor and the second sensor may be used as in the first embodiment. A value of the second sensor may be estimated using a part of the latent expressions obtained from the first sensor.

The invention is not limited to the above embodiments, and includes various modifications within the scope of the claims. For example, the embodiments described above have been described in detail for easy understanding of the invention, and are not necessarily limited to those including all the configurations described above. A part of a configuration of one embodiment can be replaced with the configuration of another embodiment, and the configuration of another embodiment can be added to the configuration of one embodiment.

## Claims

1. An abnormality detection system (1) for detecting an abnormality of a target machine (2) by a computer, wherein
the computer includes a communication unit configured to acquire first data (D0) from a first sensor (11) attached to the target machine and second data (D1, RV12(1), RV12(2), RV12(3)) from a second sensor (12, 12(1), 12(2), 12(3)) attached to the target machine, an arithmetic unit (101), and a memory unit,
whereby the arithmetic unit (101) includes
an encoding unit (13) trained to generate latent expressions (LV12(1), LV12(2), LV12(3), LV0) including a predetermined latent expression (LV12(1), LV12 (2), LV12(3)) for estimating the second data on the basis of the first data and a latent expression (LV0) able to be used for restoring the first data,
a decoding unit (14) trained to restore the first data (DOA) from the latent expressions (LV12(1), LV12(2), LV12(3), LV0), and
an abnormality detection unit (16) configured to detect the abnormality of the target machine on the basis of a restoration error between the first data(DO) and the first data (DOA) restored by the decoding unit, wherein
the arithmetic unit (101) further includes a training unit (15) configured to compare the first data (D0) output from the first sensor (11) and the first data (D0A) restored by the decoding unit (14), and calculate the restoration error which is the difference therebetween,
wherein the training unit (15) is further configured to compare the second data estimated from the predetermined latent expression (LV12(1), LV12(2), LV12(3)) with the second data (RV12(1), RV12(2), RV12(3)) measured by the second sensor (12(1), 12(2), 12(3)), and calculate an estimation error which is a difference therebetween,
wherein the training unit (15) is further configured to adjust parameters of the encoding unit (13) and parameters of the decoding unit (14) such that a total loss of the estimation error and the restoration error is minimized.

2. The abnormality detection system (1) according to claim 1, wherein
the arithmetic unit (101) is configured to obtain the predetermined latent expressions in a training mode when the second sensor is temporarily attached to the target machine, and
the arithmetic unit (101) further includes a state monitoring unit configured to monitor a state, of the target machine (2) on the basis of the first data and the second data estimated from the predetermined latent expression.

3. The abnormality detection system (1) according to claim 2, wherein
the memory unit stores a sensor correspondence relation management unit in which the second sensor.(12) that outputs the second data (D1) that can be estimated from the first data (D0) is associated with each of first sensor candidates in advance, and
the arithmetic unit (101) further includes a first sensor selection unit (18) configured to select any first sensor (11A) from the first sensor candidates on the basis of the sensor correspondence relation management unit.

4. The abnormality detection system (1) according to claim 1, wherein
the abnormality detection unit (16) is configured to detect the abnormality of the target machine (2) on the basis of the restoration error between the first data (D0) observed by the first sensor and the first data (D0A) restored by the decoding unit and an estimation error between the second data observed by the second sensor and the second data estimated from the predetermined latent expression.

5. The abnormality detection system (1) according to claim 1, wherein
the memory unit stores a pre-trained model (M0) trained in advance on the basis of the first data from the first sensor (11) and the second data from the second sensor (12) attached to a machine of the same type as the target machine (2) and having a different individual identification number, and
the arithmetic unit (101) is configured to use the pre-trained model (M0) as an initial model of a training model for adjusting a parameter of the encoding unit (13) and a parameter of the decoding unit (14).

6. The abnormality detection system (1) according to claim 1, wherein
the arithmetic unit (101) further includes a data interpolation unit configured to interpolate the first data from the first sensor.

7. An abnormality detection method for detecting an abnormality of a target machine (2) by a computer, the abnormality detection method comprising:
the computer
acquiring (S101, S202) first data (DO) from a first sensor (11) attached to the target machine; and
acquiring second data : (D1, RV12(1), RV12(2), RV12(3)) from a second sensor (12, 12(1), 12(2), 12(3)) attached to the target machine;
**characterized by**, the computer, in a training process,
training (S104) an encoding unit (13) such that the encoding unit generates latent expressions including a predetermined latent expression (LV12(1), LV12(2), LV12(3)) that estimates the second data (D1) on the basis of the first data (DO) and a latent expression (LV0) used for restoring the first data;
training (S106) a decoding unit (14) such that the decoding unit restores the first data from the latent expressions;
calculating a restoration error between the first data (DO) and the first data (DOA) restored by the decoding unit;
calculating (S107) an estimation error between the second data (RV12(1), RV12(2), RV12(3)) observed by the second sensor and the second data estimated from the predetermined latent expression (LV12(1), LV12(2), LV12(3)); and
adjusting parameters of the encoding unit (13) and parameters of the decoding unit (14) such that a total loss of the estimation error and the restoration error is minimized; and
the computer, in a detection process,
detecting (S208) the abnormality of the target machine on the basis of the calculated restoration error; and
monitoring a state of the target machine on the basis of the first data and the second data estimated from the predetermined latent expression.

8. The method according to claim 7, wherein: when physical quantities in accordance with the state of the target machine (2) are measured by the sensors, the method comprises selecting a set of hyper parameters to be used when calculating a difference between an observation value and a restoration value according to a relation between the physical quantities and a type of the target machine.

9. The method according to claim 8, wherein the set of the hyper parameters is prepared in advance, preferably in accordance with physical properties and a required robustness of the target machine.

## Patentansprüche

1. Anomalieerkennungssystem (1) zum Erkennen einer Anomalie einer Zielmaschine (2) durch einen Computer, wobei
der Computer eine Kommunikationseinheit, die konfiguriert ist, um erste Daten (D0) von einem ersten Sensor (11), der an der Zielmaschine angebracht ist, und zweite Daten (D1, RV12(1), RV12(2), RV12(3)) von einem zweiten Sensor (12, 12(1), 12(2), 12(3)), der an der Zielmaschine angebracht ist, zu erfassen, eine Arithmetikeinheit (101) und eine Speichereinheit umfasst,
wobei die Arithmetikeinheit (101) umfasst
eine Codiereinheit (13), die trainiert ist, um latente Ausdrücke (LV12(1), LV12(2), LV12(3), LV0) zu erzeugen, die einen vorbestimmten latenten Ausdruck (LV12(1), LV12(2), LV12(3)) zum Schätzen der zweiten Daten auf der Basis der ersten Daten und eines latenten Ausdrucks (LV0), der zum Wiederherstellen der ersten Daten verwendet werden kann,
eine Decodiereinheit (14), die trainiert ist, um die ersten Daten (DOA) aus den latenten Ausdrücken (LV12(1), LV12(2), LV12(3), LV0) wiederherzustellen, und
eine Anomalieerkennungseinheit (16), die konfiguriert ist, um die Anomalie der Zielmaschine auf der Basis eines Wiederherstellungsfehlers zwischen den ersten Daten (D0) und den ersten Daten (DOA), die durch die Decodiereinheit wiederhergestellt werden, zu erkennen, wobei
die Arithmetikeinheit (101) ferner eine Trainingseinheit (15) umfasst, die konfiguriert ist, um die ersten Daten (D0), die von dem ersten Sensor (11) ausgegeben werden, und die ersten Daten (DOA), die durch die Decodiereinheit (14) wiederhergestellt werden, zu vergleichen und den Wiederherstellungsfehler zu berechnen, der die Differenz dazwischen ist,
wobei die Trainingseinheit (15) ferner konfiguriert ist, um die zweiten Daten, die aus dem vorbestimmten latenten Ausdruck (LV12(1), LV12(2), LV12(3)) geschätzt werden, mit den zweiten Daten (RV12(1), RV12(2), RV12(3)), die durch den zweiten Sensor (12(1), 12(2), 12(3)) gemessen werden, zu vergleichen und einen Schätzfehler zu berechnen, der eine Differenz dazwischen ist,
wobei die Trainingseinheit (15) ferner konfiguriert ist, um Parameter der Codiereinheit (13) und Parameter der Decodiereinheit (14) derart anzupassen, dass ein Gesamtverlust des Schätzfehlers und des Wiederherstellungsfehlers minimiert wird.

2. Anomalieerkennungssystem (1) nach Anspruch 1, wobei
die Arithmetikeinheit (101) konfiguriert ist, um die vorbestimmten latenten Ausdrücke in einem Trainingsmodus zu erhalten, wenn der zweite Sensor vorübergehend an der Zielmaschine angebracht ist,
und
die Arithmetikeinheit (101) ferner eine Zustandsüberwachungseinheit umfasst, die konfiguriert ist, um einen Zustand der Zielmaschine (2) auf der Basis der ersten Daten und der zweiten Daten, die aus dem vorbestimmten latenten Ausdruck geschätzt werden, zu überwachen.

3. Anomalieerkennungssystem (1) nach Anspruch 2, wobei
die Speichereinheit eine Sensorentsprechungsbeziehungsverwaltungseinheit speichert, in der der zweite Sensor (12), der die zweiten Daten (D1) ausgibt, die aus den ersten Daten (D0) geschätzt werden können, im Voraus mit jedem der ersten Sensorkandidaten verknüpft wird, und
die Arithmetikeinheit (101) ferner eine erste Sensorauswahleinheit (18) umfasst, die konfiguriert ist, um einen beliebigen ersten Sensor (11A) aus den ersten Sensorkandidaten auf der Basis der Sensorentsprechungsbeziehungsverwaltungseinheit auszuwählen.

4. Anomalieerkennungssystem (1) nach Anspruch 1, wobei
die Anomalieerkennungseinheit (16) konfiguriert ist, um die Anomalie der Zielmaschine (2) auf der Basis des Wiederherstellungsfehlers zwischen den ersten Daten (D0), die durch den ersten Sensor beobachtet werden, und den ersten Daten (DOA), die durch die Decodiereinheit wiederhergestellt werden, und eines Schätzfehlers zwischen den zweiten Daten, die durch den zweiten Sensor beobachtet werden, und den zweiten Daten, die aus dem vorbestimmten latenten Ausdruck geschätzt werden, zu erkennen.

5. Anomalieerkennungssystem (1) nach Anspruch 1, wobei
die Speichereinheit ein vortrainiertes Modell (M0) speichert, das im Voraus auf der Basis der ersten Daten von dem ersten Sensor (11) und der zweiten Daten von dem zweiten Sensor (12), der an einer Maschine desselben Typs wie die Zielmaschine (2) angebracht ist und eine andere individuelle Identifikationsnummer aufweist, trainiert wird, und
die Arithmetikeinheit (101) konfiguriert ist, um das vortrainierte Modell (M0) als ein Anfangsmodell eines Trainingsmodells zum Anpassen eines Parameters der Codiereinheit (13) und eines Parameters der Decodiereinheit (14) zu verwenden.

6. Anomalieerkennungssystem (1) nach Anspruch 1, wobei
die Arithmetikeinheit (101) ferner eine Dateninterpolationseinheit umfasst, die konfiguriert ist, um die ersten Daten von dem ersten Sensor zu interpolieren.

7. Anomalieerkennungsverfahren zum Erkennen einer Anomalie einer Zielmaschine (2) durch einen Computer, wobei das Anomalieerkennungsverfahren umfasst:
der Computer
Erfassen (S101, S202) erster Daten (D0) von einem ersten Sensor (11), der an der Zielmaschine angebracht ist; und
Erfassen zweiter Daten (D1, RV12(1), RV12(2), RV12(3)) von einem zweiten Sensor (12, 12(1), 12(2), 12(3)), der an der Zielmaschine angebracht ist;
**gekennzeichnet durch**, durch den Computer, in einem Trainingsprozess,
Trainieren (S104) einer Codiereinheit (13) derart, dass die Codiereinheit latente Ausdrücke erzeugt, die einen vorbestimmten latenten Ausdruck (LV12(1), LV12(2), LV12(3)) umfassen, der die zweiten Daten (D1) auf der Basis der ersten Daten (D0) und eines latenten Ausdrucks (LV0), der zum Wiederherstellen der ersten Daten verwendet wird, schätzt;
Trainieren (S106) einer Decodiereinheit (14) derart, dass die Decodiereinheit die ersten Daten aus den latenten Ausdrücken wiederherstellt;
Berechnen eines Wiederherstellungsfehlers zwischen den ersten Daten (D0) und den ersten Daten (DOA), die durch die Decodiereinheit wiederhergestellt werden;
Berechnen (S107) eines Schätzfehlers zwischen den zweiten Daten (RV12(1), RV12(2), RV12(3)), die durch den zweiten Sensor beobachtet werden, und den zweiten Daten, die aus dem vorbestimmten latenten Ausdruck (LV12(1), LV12(2), LV12(3)) geschätzt werden; und
Anpassen von Parametern der Codiereinheit (13) und Parametern der Decodiereinheit (14) derart, dass ein Gesamtverlust des Schätzfehlers und des Wiederherstellungsfehlers minimiert wird; und
durch den Computer, in einem Erkennungsprozess,
Erkennen (S208) der Anomalie der Zielmaschine auf der Basis des berechneten Wiederherstellungsfehlers; und
Überwachen eines Zustands der Zielmaschine auf der Basis der ersten Daten und der zweiten Daten, die aus dem vorbestimmten latenten Ausdruck geschätzt werden.

8. Verfahren nach Anspruch 7, wobei: wenn physikalische Größen gemäß dem Zustand der Zielmaschine (2) durch die Sensoren gemessen werden, das Verfahren das Auswählen eines Satzes von Hyperparametern umfasst, die zu verwenden sind, wenn eine Differenz zwischen einem Beobachtungswert und einem Wiederherstellungswert gemäß einer Beziehung zwischen den physikalischen Größen und einem Typ der Zielmaschine berechnet wird.

9. Verfahren nach Anspruch 8, wobei der Satz der Hyperparameter im Voraus erstellt wird, vorzugsweise gemäß physikalischen Eigenschaften und einer erforderlichen Robustheit der Zielmaschine.

## Revendications

1. Système de détection d'anomalie (1) pour détecter une anomalie d'une machine cible (2) par un ordinateur, dans lequel
l'ordinateur comprend une unité de communication configurée pour acquérir des premières données (D0) à partir d'un premier capteur (11) fixé à la machine cible et des secondes données (D1, RV12(1), RV12(2), RV12(3)) à partir d'un second capteur (12, 12(1), 12(2), 12(3)) fixé à la machine cible, une unité arithmétique (101), et une unité de mémoire,
moyennant quoi l'unité arithmétique (101) comprend
une unité de codage (13) entraînée pour générer des expressions latentes (LV12(1), LV12(2), LV12(3), LV0) comprenant une expression latente prédéterminée (LV12(1), LV12(2), LV12(3)) pour estimer les secondes données sur la base des premières données et une expression latente (LV0) pouvant être utilisée pour restaurer les premières données,
une unité de décodage (14) entraînée pour restaurer les premières données (DOA) à partir des expressions latentes (LV12(1), LV12(2), LV12(3), LV0), et
une unité de détection d'anomalie (16) configurée pour détecter l'anomalie de la machine cible sur la base d'une erreur de restauration entre les premières données (D0) et les premières données (DOA) restaurées par l'unité de décodage, dans lequel
l'unité arithmétique (101) comprend en outre une unité d'entraînement (15) configurée pour comparer les premières données (D0) sorties du premier capteur (11) et les premières données (DOA) restaurées par l'unité de décodage (14), et calculer l'erreur de restauration qui est la différence entre elles,
dans lequel l'unité d'entraînement (15) est en outre configurée pour comparer les secondes données estimées à partir de l'expression latente prédéterminée (LV12(1), LV12(2), LV12(3) avec les secondes données (RV12(1), RV12(2), RV12(3)) mesurées par le second capteur (12(1), 12(2), 12(3)), et calculer une erreur d'estimation qui est une différence entre elles,
dans lequel l'unité d'entraînement (15) est en outre configurée pour ajuster des paramètres de l'unité de codage (13) et des paramètres de l'unité de décodage (14) de sorte qu'une perte totale de l'erreur d'estimation et de l'erreur de restauration soit minimisée.

2. Système de détection d'anomalie (1) selon la revendication 1, dans lequel
l'unité arithmétique (101) est configurée pour obtenir les expressions latentes prédéterminées dans un mode d'entraînement lorsque le second capteur est temporairement fixé à la machine cible,
et
l'unité arithmétique (101) comprend en outre une unité de surveillance d'état configurée pour surveiller un état de la machine cible (2) sur la base des premières données et des secondes données estimées à partir de l'expression latente prédéterminée.

3. Système de détection d'anomalie (1) selon la revendication 2, dans lequel
l'unité de mémoire stocke une unité de gestion de relation de correspondance de capteur dans laquelle le second capteur (12) qui sort les secondes données (D1) qui peuvent être estimées à partir des premières données (D0) est associé à chacun des premiers candidats de capteur à l'avance, et
l'unité arithmétique (101) comprend en outre une première unité de sélection de capteur (18) configurée pour sélectionner tout premier capteur (11A) parmi les premiers candidats de capteur sur la base de l'unité de gestion de relation de correspondance de capteur.

4. Système de détection d'anomalie (1) selon la revendication 1, dans lequel
l'unité de détection d'anomalie (16) est configurée pour détecter l'anomalie de la machine cible (2) sur la base de l'erreur de restauration entre les premières données (D0) observées par le premier capteur et les premières données (DOA) restaurées par l'unité de décodage et d'une erreur d'estimation entre les secondes données observées par le second capteur et les secondes données estimées à partir de l'expression latente prédéterminée.

5. Système de détection d'anomalie (1) selon la revendication 1, dans lequel
l'unité de mémoire stocke un modèle pré-entraîné (M0) entraîné à l'avance sur la base des premières données à partir du premier capteur (11) et des secondes données à partir du second capteur (12) fixé à une machine du même type que la machine cible (2) et ayant un numéro d'identification individuel différent, et
l'unité arithmétique (101) est configurée pour utiliser le modèle pré-entraîné (M0) en tant que modèle initial d'un modèle d'entraînement pour ajuster un paramètre de l'unité de codage (13) et un paramètre de l'unité de décodage (14).

6. Système de détection d'anomalie (1) selon la revendication 1, dans lequel
l'unité arithmétique (101) comprend en outre une unité d'interpolation de données configurée pour interpoler les premières données à partir du premier capteur.

7. Procédé de détection d'anomalie pour détecter une anomalie d'une machine cible (2) par un ordinateur, le procédé de détection d'anomalie comprenant :
l'ordinateur
acquérant (S101, S202) des premières données (D0) à partir d'un premier capteur (11) fixé à la machine cible ; et
acquérant des secondes données (D1, RV12(1), RV12(2), RV12(3)) à partir d'un second capteur (12, 12(1), 12(2), 12(3)) fixé à la machine cible ;
**caractérisé par**, l'ordinateur, dans un processus d'entraînement,
entraînant (S104) une unité de codage (13) de sorte que l'unité de codage génère des expressions latentes comprenant une expression latente prédéterminée (LV12(1), LV12(2), LV12(3)) qui estime les secondes données (D1) sur la base des premières données (D0) et une expression latente (LV0) utilisée pour restaurer les premières données ;
entraînant (S106) une unité de décodage (14) de sorte que l'unité de décodage restaure les premières données à partir des expressions latentes ;
calculant une erreur de restauration entre les premières données (D0) et les premières données (DOA) restaurées par l'unité de décodage ;
calculant (S107) une erreur d'estimation entre les secondes données (RV12(1), RV12(2), RV12(3)) observées par le second capteur et les secondes données estimées à partir de l'expression latente prédéterminée (LV12(1), LV12(2), LV12(3)) ; et
ajustant des paramètres de l'unité de codage (13) et des paramètres de l'unité de décodage (14) de sorte qu'une perte totale de l'erreur d'estimation et de l'erreur de restauration soit minimisée ; et
l'ordinateur, dans un processus de détection,
détectant (S208) l'anomalie de la machine cible sur la base de l'erreur de restauration calculée ; et
surveillant un état de la machine cible sur la base des premières données et des secondes données estimées à partir de l'expression latente prédéterminée.

8. Procédé selon la revendication 7, dans lequel : lorsque des quantités physiques en fonction de l'état de la machine cible (2) sont mesurées par les capteurs, le procédé comprend la sélection d'un ensemble d'hyper-paramètres à utiliser lors du calcul d'une différence entre une valeur d'observation et une valeur de restauration en fonction d'une relation entre les quantités physiques et un type de la machine cible.

9. Procédé selon la revendication 8, dans lequel l'ensemble des hyper-paramètres est préparé à l'avance, de préférence en fonction de propriétés physiques et d'une robustesse requise de la machine cible.
